# EUROPEAN PATENT APPLICATION

(11) **EP 2 397 215 A1**
(43) Date of publication of application: **21.12.2011**
(21) Application number: 10166671.7
(22) Date of filing: 21.06.2010
(51) Int. Cl.: B01D 53/86, F23J 15/02, B01D 53/56

(54) **Method of controlling the concentration of a substance of a dust material of a process plant**

(71) Applicant: Alstom Technology Ltd, 5400 Baden (CH)
(72) Inventor: Larsson, Mikael, 431 44, Mölndal (SE)
(74) Representative: Simonsson, Erik

(57) **Abstract**

A device and a method of controlling the concentration of a reducing agent in a dust material formed as a by-product in a process plant (1) comprises the cleaning, at least partially, of a dust removal device (6) collecting the dust material based on an estimated concentration of the substance in the dust material collected in the dust removal device (6).

## Description

### Field of the Invention

The present invention relates to a method of controlling the concentration of a reducing agent of a dust material formed as a by-product in a process plant. The process plant comprises a processing unit that generates a process gas containing dust particles, and a dust removal device for collecting at least a portion of the dust particles of the process gas.

The present invention further relates to a cleaning controller for controlling the concentration of a reducing agent in a dust material formed as a by-product in a process plant of the above referenced type.

### Background of the Invention

In fuel combustion, such as combustion of coal, oil, peat, waste, etc., in a combustion plant, such as a power plant, a hot process gas is generated. Such process gas contains, among other components, dust particles, sometimes referred to as fly ash. The dust particles are often removed from the process gas by means of a dust removal device, such as an electrostatic precipitator or a fabric filter. The process gas may also contain nitrogen oxides. To reduce the amount of nitrogen oxides in the process gas, a reducing agent such as ammonia or urea is often supplied to the process gas for reaction with the nitrogen oxides. Often the supply of reducing agent is made upstream with respect to the flow of process gas, of the dust removal device. At least a portion of the excess reducing agent supplied to react with the nitrogen oxides ends up as contaminant in the fly ash collected in the dust removal device. Such reducing agent contaminant makes recycling, re-use and/or disposal of the collected fly ash more difficult.

EP 0 292 012 discloses a process in which an electrostatic precipitator removes flue gas dust particles. The electrostatic precipitator is arranged downstream with respect to the flow of process gas of a selective catalytic reduction unit. Dust particles collected in a third field of the electrostatic precipitator are transported through a heating device to vaporize ammonia absorbed on the dust particles. The released ammonia is returned to the selective catalytic reduction unit. The heating device is, however, undesirable due to investment costs and operating costs associated therewith due to inefficiency.

### Summary of the Invention

An object of the present invention is to provide a method of controlling reducing agent concentration in a dust material formed as a by-product in a process plant, with said method being more efficient than the method of the prior art.

This object is achieved by means of a method of controlling the concentration of a reducing agent in a dust material formed as a by-product in a process plant. The process plant comprises a processing unit generating a process gas containing dust particles, and a dust removal device for collecting at least a portion of the dust particles of the process gas. The method comprises
executing a dust removal device cleaning sequence based on an estimated concentration of reducing agent in collected dust particles to remove at least a portion of collected dust particles from the dust removal device.

This method offers the advantage that dust removal device cleaning may be controlled to occur at a point in time prior to collected dust particles having absorbed too much of the reducing agent. Accordingly, the dust particles may still be useful as a product, or at least do not require a costly after-treatment.

According to one embodiment, the estimated concentration of the reducing agent in the dust particles collected in the dust removal device is compared to a limit value. The step of executing a cleaning sequence is thus initiated when the estimated concentration of reducing agent reaches the limit value. An advantage of this embodiment is that dust removal device cleaning may be controlled to occur no earlier than necessary depending on the concentration of reducing agent in the collected dust particles. Hence, the cleaning need not occur more often than necessary thus reducing associated costs.

According to one embodiment, the estimated concentration of reducing agent in the dust particles collected in the dust removal device comprises measuring the amount of reducing agent supplied to dust removal device. A correlation between the amount of reducing agent supplied to dust removal device and the concentration of reducing agent in the dust particles collected in the dust removal device is then used. An advantage of this embodiment is that dust removal device cleaning may be controlled based on actual operating conditions, such that cleaning is executed more often at times of greater reducing agent supply and less often at times of lesser reducing agent supply.

According to one embodiment, the estimated concentration of reducing agent in the dust particles collected in the dust removal device is determined by measuring, directly or indirectly, the concentration of reducing agent of the dust particles collected in the dust removal device. An advantage of this embodiment is that control of the dust removal device cleaning is more accurate.

A further object of the present invention is to provide a device, which is operative for controlling the concentration of a reducing agent in a dust material formed as a by-product in a process plant in a more efficient manner than that of the prior art device.

This object is achieved by means of a cleaning controller for controlling the concentration of a reducing agent in a dust material formed as a by-product in a process plant. The process plant comprises a processing unit generating a process gas containing dust particles, and a dust removal device for collecting at least a portion of the dust particles of the process gas. The cleaning controller is operative for estimating reducing agent concentration in the dust particles collected in the dust removal device, and executing a cleaning sequence as necessitated based on the estimated reducing agent concentration to remove at least a portion of the collected dust particles from the dust removal device.

An advantage of the subject cleaning controller is that more dust material may be utilized for useful purposes, since cleaning may be performed before the collected dust particles have absorbed too high of a concentration of reducing agent contaminant.

According to one embodiment, the subject cleaning controller is operative for estimating the reducing agent concentration in the dust particles collected in the dust removal device, for comparing the estimated concentration to a limit value, and for initiating the cleaning sequence when the estimated reducing agent concentration reaches the limit value. An advantage of this embodiment is that the reducing agent concentration in the dust particles may be controlled very accurately.

According to a further embodiment, the cleaning controller is operative for receiving a signal indicating an amount of reducing agent supplied upstream, with regard to the flow of process gas, of the dust removal device. The cleaning controller is also operative for estimating reducing agent concentration in the dust particles collected in the dust removal device based on a correlation between the amount of reducing agent supplied to the dust removal device and the reducing agent concentration in the dust particles collected in the dust removal device. An advantage of this embodiment is that dust removal device cleaning may be optimized to variations in the operating conditions.

Further objects and features of the present invention will be apparent from the following description and claims.

### Brief description of the Drawings

The present invention is now described in more detail with reference to the appended drawings in which:
Fig. 1 is a schematic side view of a power plant;
Fig. 2 is a graph illustrating a relationship between specific surface and concentration of a reducing agent in dust particles; and
Fig. 3 is a graph illustrating a method of controlling dust removal device cleaning.

### Description of Preferred Embodiments

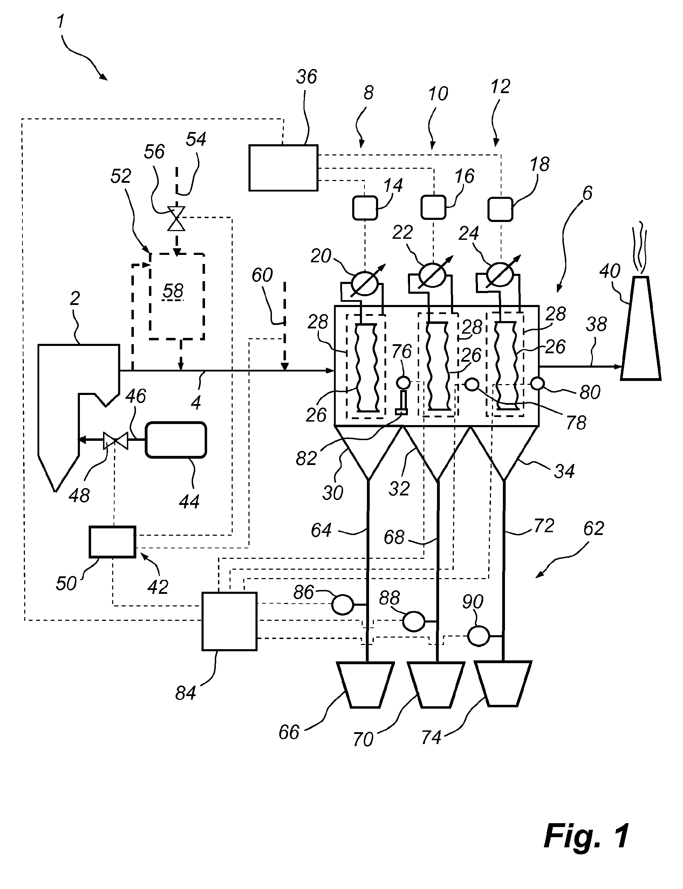

Fig. 1 is a schematic side view illustrating a process plant in the form of a power plant 1. The power plant 1 comprises a processing unit in the form of a combustion unit such as a coal fired boiler 2. In the coal fired boiler 2, coal is combusted in the presence of an oxygen containing gas, such as air or oxygen gas, generating a hot process gas or "flue gas" that leaves the coal fired boiler 2 via a fluidly connected duct 4. The flue gas generated in the coal fired boiler 2 comprises dust particles that must be removed from the flue gas before the flue gas may be emitted to the ambient air. The duct 4 is fluidly connected to a dust removal device in the form of an electrostatic precipitator 6 which, with respect to the flow direction of the flue gas, is located downstream of the boiler 2. Electrostatic precipitators are known in the art, as described in for example, US 4,502,872, incorporated herein in its entirety by reference.

The electrostatic precipitator 6 comprises three compartments in the form of three independent fields, namely a first field 8, a second field 10, and a third field 12, arranged in series, with respect to the flow direction of the flue gas. The three fields 8, 10 and 12 are electrically insulated from each other. Each of the fields 8, 10 and 12 is provided with a control device 14, 16 and 18, respectively. Each control device 14, 16 and 18 controls the function of one rectifier 20, 22 and 24, respectively.

Each of the fields 8, 10 and 12 comprises several discharge electrodes and several collecting electrode plates arranged in a similar manner as are illustrated in US 4,502,872. Fig. 1, in the interest of maintaining clarity of illustration, only illustrates one discharge electrode 26 and one collecting electrode plate 28 of each field 8, 10, 12, respectively. In Fig. 1, it is schematically illustrated that the rectifier 20 applies power, i.e., voltage and current, between the discharge electrodes 26 and the collecting electrode plates 28 of the first field 8 in order to charge the dust particles present in the flue gas flowing through electrostatic precipitator 6. After being so charged, the dust particles collect on collecting electrode plates 28. A similar process occurs in the second and third fields 10, 12. The collected dust particles are removed from collecting electrode plates 28 by means of so-called rapping devices as described in more detail hereinafter, and finally collected in hoppers 30, 32 and 34, respectively. Hoppers 30, 32 and 34 therefore contain what is hereinafter referred to as "removed dust".

Control devices 14, 16 and 18 are individually controlled by means of an electrostatic precipitator control unit 36. Typically, and merely as an example, about 80 to 95 % by weight of the total amount of flue gas dust particles may be collected on collecting electrode plates in first field 8, about 4 to 18 % by weight of the total amount of flue gas dust particles may be collected on collecting electrode plates in second field 10, and about 0 to 2 % by weight of the total amount of flue gas dust particles may be collected on collecting electrode plates in third field 12.

A duct 38 is fluidly connected to electrostatic precipitator 6 and is operative for the flow of flue gas from which at least part of the dust particles have been removed, from electrostatic precipitator 6 to a stack 40. Stack 40 releases the flue gas to the atmosphere.

Flue gas generated in boiler 2 also contains nitrogen oxides (NOx). In order to remove NOx from the flue gas, a Selective Non Catalytic Reduction (SNCR) system 42 is arranged and used in conjunction with the boiler 2. The SNCR system 42 comprises a tank 44 comprising a reducing agent, such as urea or ammonia, a fluidly connected supply pipe 46 for supplying the reducing agent to the fluidly connected boiler 2, a control valve 48 for controlling the supply of reducing agent from tank 44 to boiler 2 via pipe 46, and a SNCR control system 50 for controlling control valve 48. The principle of SNCR is known, as disclosed in for example, US 6,146,605, incorporated herein in its entirety by reference. SNCR involves supplying reducing agent to a high temperature zone in boiler 2 where the reducing agent reacts with NOx to chemically reduce the NOx to harmless nitrogen gas.

Optionally, power plant 1 may also comprise, either in addition to the SNCR system 42 or as an alternative to the SNCR system 42, a Selective Catalytic Reduction (SCR) system 52, illustrated by dashed lines in Fig. 1. SCR systems are known for use in reducing NOx as described in, for example, US 6,146,605, incorporated herein in its entirety by reference. SCR system 52 comprises a supply pipe 54 through which reducing agent, such as urea or ammonia, is supplied to a fluidly connected reactor 58 from a fluidly connected tank (not shown). Control valve 56 on supply pipe 54 controls the supply of reducing agent to reactor 58. Reactor 58 houses a catalytic material, such as vanadium pentoxide. At least a part of the flue gas leaving boiler 2, in this optional embodiment, flows to reactor 58. In reactor 58 the flue gas contacts reducing agent and the NOx in the flue gas reacts, under the influence of the catalytic material, with the reducing agent to form harmless nitrogen gas. The flue gas then leaves reactor 58 via fluidly connected duct 4 and flows therethrough to fluidly connected electrostatic precipitator 6.

Control system 50, which controls the supply of reducing agent to SNCR system 42 may also control the control valve 56 of SCR system 52 such that a suitable amount of reducing agent is supplied to SCR system 52 via pipe 54. The supply of reducing agent to SNCR system 42 and/or to SCR system 52 may be controlled based on the load in boiler 2, the concentration of NOx as measured in stack 40 and/or the like.

As a further option, optionally in combination with SNCR system 42 and/or SCR system 52, power plant 1 may be provided with an ammonia conditioning system 60, illustrated with a dashed line in Fig 1. Ammonia conditioning system 60 is operative for supplying ammonia, NH₃, from a fluidly connected ammonia supply device, not illustrated in Fig. 1 for purposes of clarity of illustration, to fluidly connected duct 4 just upstream with regard to the flow of flue gas, of electrostatic precipitator 6. The purpose of ammonia conditioning system 60 is to reduce the resistivity of dust particles in the flue gas, thus making electrostatic precipitator 6 more efficient in removing the dust particles from the flue gas. The supply of ammonia from the ammonia conditioning system 60 may be controlled by means of control system 50.

The power plant 1 is provided with a dust handling system 62 comprising means for further handling of removed dust from hoppers 30, 32 and 34 of electrostatic precipitator 6. Hence, hopper 30 of first field 8 is provided with a fluidly connected disposal pipe 64 for transporting removed dust from hopper 30 to a first dust collecting bin 66. In a similar manner, hopper 32 of second field 10 is provided with a fluidly connected disposal pipe 68 for transporting removed dust from hopper 32 to a second dust collecting bin 70. Furthermore, hopper 34 of third field 12 is provided with a fluidly connected disposal pipe 72 for transporting removed dust from hopper 34 to a third dust collecting bin 74.

After some time of operation, collecting electrode plates 28 of respective fields 8, 10 and 12 become loaded with collected dust particles. Hence, it is necessary to periodically run a cleaning sequence in each of fields 8, 10 and 12, to clean the respective collecting electrode plates 28 from collected dust particles. Such cleaning is performed by means of first, second and third rapping devices 76, 78 and 80, respectively. The first rapping device 76 is arranged for rapping collecting electrode plates 28 of first field 8. First rapping device 76 comprises a number of motor driven hammers, of which only one hammer 82 is illustrated in Fig. 1 for reasons of maintaining clarity of illustration. When in operation, motor driven hammers 82 impact the collecting electrode plates 28 causing the collected dust particles fall off collecting electrode plates 28 and flow down into hopper 30 as removed dust. Motor driven hammers 82 are known for cleaning collecting electrode plates of electrostatic precipitators. An example of such a motor driven hammer is disclosed in US 4,526,591, incorporated herein in its entirety by reference. Also other types of devices for cleaning collecting electrode plates 28 could be used, including other types of hammers, so-called magnetic impulse gravity impact (MIGI) rappers, and like devices. Likewise, second rapping device 78 is arranged for cleaning collecting electrode plates 28 of second field 10 by means of motor driven hammers (not shown), such that collected dust particles may be collected as removed dust in hopper 32, and third rapping device 80 is arranged for cleaning collecting electrode plates 28 of third field 12 by means of motor driven hammers (not shown), such that collected dust particles may be collected in the hopper 34 as removed dust.

Rapping controller 84 individually activates rapping devices 76, 78 and 80 to execute a cleaning sequence in the form of a rapping event, which may last for, typically, 10 seconds to 4 minutes. Since a much higher percentage of the collected dust particles are collected on collecting electrode plates 28 of first and second fields 8 and 10, respectively, compared to that of collecting electrode plates 28 of third field 12, first and second rapping devices 76 and 78 are activated much more frequently than is third rapping device 80. Optionally, rapping controller 84, in conjunction with activating a cleaning sequence, may also send a signal to electrostatic precipitator control unit 36. Such a signal received by electrostatic precipitator control unit 36 may cause electrostatic precipitator control unit 36 to control one or more control devices 14, 16 and 18 to control one or more rectifiers 20, 22 and 24 to alter the power, i.e., current and/or voltage, supplied to one or more fields 8, 10 and 12, so as to shut off or at least reduce power, during operation of one or more rapping devices 76, 78 and 80. Such a reduction in power supply in conjunction with operating a rapping device is called "power down rapping". Power down rapping reduces electrical forces that hold collected dust particles on collecting electrode plates 28, such that the collected dust particles are more easily removed therefrom during the rapping event.

Flue gas dust particles generated in the boiler 2 have a tendency to absorb reducing agent, such as ammonia. This means that the dust particles collected in the electrostatic precipitator 6 will contain some reducing agent as a contaminant, potentially reducing the usefulness of the removed dust in cement production, land filling etc. It has now been discovered that the concentration of reducing agent contaminant in the removed dust depends not only on the dust particle size, but also on the duration of the dust particle residence time on the collecting electrode plates 28. Hence, by controlling the residence time of the collected dust particles on collecting electrode plates 28 it is possible to control the concentration of reducing agent contaminant in the removed dust.

Rapping controller 84 is operative for receiving a signal, which is indicative of the amount of reducing agent supplied to SNCR system 42, and/or to SCR system 52 and/or to ammonia conditioning system 60. This signal to rapping controller 84 may, preferably, be sent from control system 50 which controls the supply of reducing agent to SNCR system 42, and/or to SCR system 52, and/or to ammonia conditioning system 60. The supply of reducing agent, hence, enters the subject process upstream with respect to flue gas flow, of the electrostatic precipitator 6. Based on the signal received from the control system 50, rapping controller 84 estimates the expected concentration of the reducing agent in dust particles collected in three fields 8, 10, 12. The rapping controller 84 estimation may be performed based on calculations using practical measurements and/or theoretical calculations of the correlation between the amount of reducing agent supplied to SNCR system 42, and/or to SCR system 52 and/or to ammonia conditioning system 60, and the concentration of reducing agent in the removed dust collected in the hoppers 30, 32, 34, as described in more detail hereinafter. Depending on the estimation, rapping controller 84 automatically controls one or more rapping devices 76, 78 and 80 in such a manner that removed dust collected in hoppers 30, 32 and 34 does not exceed a desired maximum concentration of reducing agent contaminant, which concentration may differ for each of the three hoppers 30, 32 and 34.

Optionally, reducing agent concentration measuring devices may be provided for measuring the concentration of reducing agent contaminant in removed dust collected in hoppers 30, 32 and 34. Hence, a first measuring device 86 could be provided for measuring the concentration of reducing agent contaminant, such as ammonia, in removed dust of hopper 30, a second measuring device 88 could be provided for measuring the concentration of reducing agent contaminant in removed dust of hopper 32, and a third measuring device 90 could be provided for measuring the concentration of reducing agent contaminant in removed dust of hopper 34. In Fig. 1, the three measuring devices 86, 88 and 90 are illustrated as measuring the concentration of reducing agent contaminant in removed dust passing through the respective disposal pipes 64, 68 and 72 fluidly connected to hoppers 30, 32 and 34, respectively. It will be appreciated, however, that the respective measuring devices 86, 88 and 90 could also, as alternative, be connected to respective hoppers 30, 32, 34, or to respective dust collecting bins 66, 70 and 74 fluidly connected to disposal pipes 64, 68 and 72, respectively.

Measurements of the concentration of reducing agent contaminants in removed dust may be made directly by measuring the actual concentration of reducing agent in the removed dust, or indirectly by measuring, for example, the concentration of gaseous ammonia in disposal pipes 64, 68 and 72, with such concentration of gaseous ammonia correlating to the concentration of ammonia in the removed dust for each respective hopper 30, 32, 34. Measuring devices suitable for utilization as measuring devices 86, 88, 90 include for example metal oxide sensors and field effect transistor sensors.

Hence, after estimating the concentration of reducing agent contaminants in dust particles collected on collecting electrode plates 28 of the various fields 8, 10, 12, or, as an alternative, after receiving measurements from the measuring devices 86, 88 and 90, or, as a further alternative, after estimating the concentration of reducing agent contaminants in dust particles collected on collecting electrode plates 28 of the various fields 8, 10, 12 and correlating the estimated concentrations with concentrations measured by measuring devices 86, 88, 90, rapping controller 84 is made to determine whether or not it would be suitable to execute a rapping event in one or more specific fields 8, 10 and 12. Rapping controller 84 thus controls the timing of rapping events so as to avoid the concentration of reducing agent contamination absorbed on dust particles in one or more particular field 8, 10 and 12 from getting too high. If the concentration of reducing agent contaminant in dust particles is approaching a maximum limit allowable for one or more specific fields 8, 10 and 12, then a rapping event is initiated and executed in the one or more specific fields 8, 10 and 12 requiring the same, such that the dust particles are removed from the collecting electrode plates 28 by means of one or more respective rapping devices 76, 78 and 80. Resultant removed dust collected in hoppers 30, 32 and 34 is transported to the corresponding fluidly connected dust collecting bins 66, 70 and 74, respectively.

Dust collecting bins 66, 70 and 74 may each have the same or differing reducing agent concentration maximum limits. Hence, for example, first and second collecting bins 66, 70 may have a reducing agent concentration maximum limit corresponding to dust quality limits acceptable for use in cement production. The third collecting bin 74 may have a reducing agent concentration maximum limit corresponding to dust quality limits acceptable for normal land filling. Hence, rapping controller 84 is made to control individual rapping events in one or more particular fields 8, 10, 12 that removed dust collected in collecting bins 66, 70 and 74 is of the same or differing suitable quality for use for one or more desired purposes. As a result, the amount of removed dust useful for one more desired purposes, such as cement production, is maximized, and the amount of removed dust that has to be sent to expensive, hazardous waste land filling is minimized.

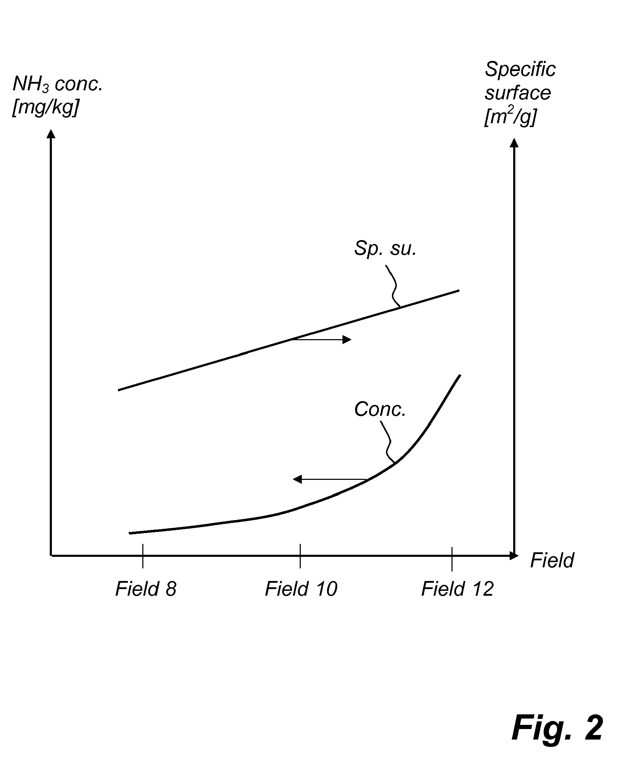

Fig. 2 illustrates, in a graph, a first curve labelled "Sp. su." depicting a relationship between the specific surface of dust particles collected and the field of dust particle collection, and a second curve labelled "Conc." depicting a relationship between the concentration of reducing agent in the form of ammonia on the collected dust particles and the field of dust particle collection. Hence, in curve Sp. su. the specific surface, in m² of specific area per gram of dust particles collected in each specific field is graphed. As so illustrated, the specific surface is higher for dust particles collected in third field 12 as compared to dust particles collected in first and second fields 8, 10. The basis for this observation is that a larger percentage of smaller particles are collected in third field 12 as compared to the particles collected in first and second fields 8 and 10. As illustrated by curve Sp. su. in Fig. 2, the relationship between specific surface and respective field of collection is almost linear. Fig. 2 also illustrates by means of curve Conc. the concentration of ammonia in the dust collected in the respective fields of collection, in the unit mg of ammonia per kg of dust collected. This Conc. curve is far from linear. On the contrary, the concentration of ammonia in the dust collected from field 12, is much higher than that in the dust collected from first and second fields 8 and 10. It is believed that the basis for the distinct non-linearity of the Conc. curve is due to and dependent upon the residence time of the dust particles on the collecting electrode plates. Such residence time is longer in the third field 12 than that in the first and second fields 8 and 10. The reason for the longer residence time of the dust particles collected in third field 12 is that, as outlined above, only about 0 to 2 % by weight of the total amount of dust particles of the flue gas is collected in third field 12, as compared to about 4-18 % by weight of the total amount of dust particles of the flue gas collected in the second field 10, and as much as about 80-95 % by weight of the total amount of dust particles of the flue gas collected in first field 8. Hence, cleaning the collecting electrode plates 28 of the first field 8 occurs much more frequently than that of collecting electrode plates in second field 10. Likewise, collecting electrode plates 28 of second field 10 are subjected to cleaning much more frequently than are collecting electrode plates 28 of third field 12. However, using the presently described equipment and method, rapping of collecting electrode plates 28 is controlled to occur not only in view of the amount of dust particles collected thereon, but also in view of the residence time of the dust particles thereon with the objective of avoiding relatively long residence times. As a result of avoiding relatively long residence times, removed dust collected in dust collecting bins 66, 70, 74 may be useful for a particular intended purpose.

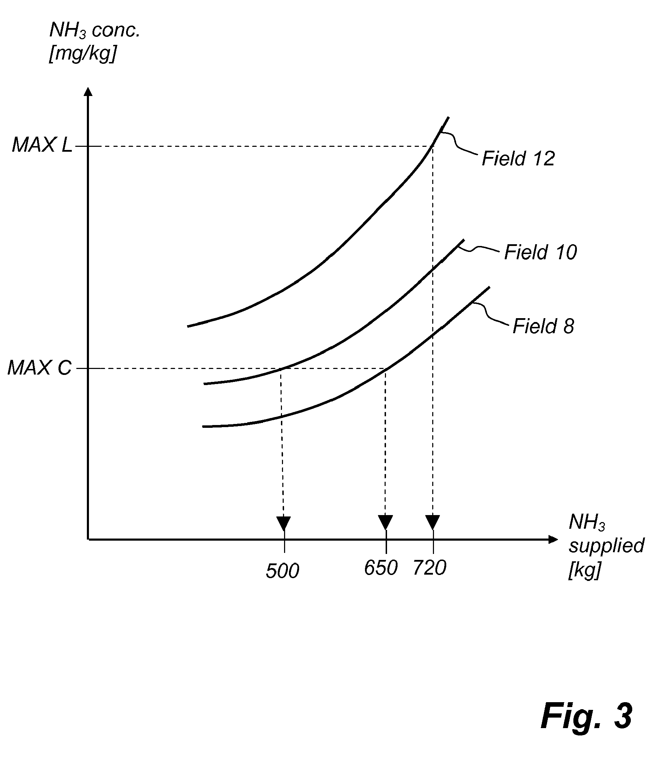

Fig. 3 illustrates, by means of a graph, one example of how rapping controller 84 may be used to control cleaning of collecting electrode plates 28 of fields 8, 10 and 12 to obtain a suitable quality removed dust in respective dust collecting bins 66, 70 and 74. On the x-axis of the graph of Fig. 3 is the total amount, in kg, of reducing agent, in this example ammonia (NH₃) supplied to SNCR system 42, since the last rapping event within a specific field. On the y-axis of the graph of Fig. 3 is the corresponding concentration, in mg/kg, of ammonia in the removed dust from that same specific field.

Based on actual measurements, three curves are graphed and labelled "Field 8", "Field 10" and "Field 12" as illustrated in Fig. 3. Field 8 curve depicts the correlation between ammonia supplied to SNCR system 42 and the measured concentration of ammonia in the removed dust in hopper 30 from first field 8. Similarly, Field 10 curve depicts the correlation between ammonia supplied to SNCR system 42 and the measured concentration of ammonia in the removed dust in hopper 32 from second field 10, and Field 12 curve depicts the correlation between ammonia supplied to SNCR system 42 and the measured concentration of ammonia in the removed dust in hopper 34 from third field 12. As illustrated in Fig. 3, a certain amount of ammonia supplied to SNCR system 42 results in a higher concentration of ammonia in the removed dust of third field 12 than that in the removed dust of first and second fields 8 and 10. This result is consistent with data depicted in Fig. 2 and observations thereof.

Based on industry requirements, such as from the cement industry, there are quality specifications, such as maximum allowable ammonia concentration for removed dust for such removed dust to be useful in, for example, the manufacture of cement. In Fig. 3 one quality specification, i.e., the maximum ammonia concentration, is graphed and labelled "MAX C". Only removed dust with a concentration of ammonia lower than MAX C meets this required quality specification and is useful in cement production.

In one example, referring to Fig. 3, rapping controller 84 receives a signal from SNCR control system 50 indicating the "total amount of ammonia" supplied to SNCR system 42. Rapping controller 84 automatically calculates the total amount of ammonia supplied to SNCR system 42 since the last rapping event of first field 8. To this end, rapping controller 84 is provided with a "summing" function for first field 8 that determines the sum of the amounts of ammonia supplied to SNCR system 42 since the last rapping event of first field 8. As indicated in Fig. 3, the maximum concentration (MAX C) of ammonia in the removed dust from first field 8 corresponds to a total supply of ammonia of 650 kg (curve "Field 8"). Hence, upon supply of 650 kg of ammonia to SNCR system 42 following a rapping event of first field 8, another rapping event is initiated. Each time a rapping event occurs, the summing function of rapping controller 84 is reset to 0 kg ammonia and again begins to sum the amounts of ammonia supplied to SNCR system 42. Hence, for first field 8, a rapping event is initiated upon risk, based on the Field 8 curve, that the dust particles collected on the collecting electrode plates 28 of first field 8 might have an ammonia concentration nearing the maximum allowable concentration MAX C. Hence, a rapping event occurs in the first field 8 once for each about 650 kg of ammonia supplied to SNCR system 42. It will be appreciated that a rapping event might be initiated in a field for a reason other than that of high dust particle ammonia concentration. For example, a rapping event may be initiated because a maximum amount of dust particles has been collected on the collecting electrode plates, even though the ammonia concentration of the dust particles is still well below MAX C.

Similar to that described above for first field 8, rapping controller 84 also controls the cleaning of second field 10. As illustrated in Fig. 3, the total amount of ammonia supplied to SNCR system 42 following a rapping event of second field 10 must not exceed 500 kg (curve "Field 10"), to ensure that dust particles collected on collecting electrode plates 28 of the second field 10 do not have an ammonia concentration exceeding MAX C. Hence, upon supply of 500 kg of ammonia to SNCR system 42 following a rapping event of second field 10, another rapping event is initiated. At the time of each rapping event of second field 10, the summing function of rapping controller 84 is reset to 0 kg ammonia, and again begins to sum up the amounts of ammonia supplied to SNCR system 42. As with first field 8, a rapping event of second field 10 may be initiated prior to the estimated ammonia concentration of the collected dust particles reaching MAX C. For example, a rapping event may occur because the amount of dust particles collected on collecting electrode plates 28 has reached a limit value. Hence, a rapping event is executed in second field 10 once for each 500 kg of ammonia supplied to the SNCR system 42, or prior to that if some other event occurs, such as collecting electrode plates 28 having collected a pre-determined amount of dust.

Finally, the rapping controller 84 also controls the rapping events of third field 12. The control of the rapping events of third field 12 is based on specifications for producing removed dust, collected in the collecting bin 74, suitable for normal land filling. The ammonia concentration specifications for removed dust suitable for normal land filling includes a maximum acceptable ammonia concentration labelled "MAX L" in Fig. 3. As illustrated in Fig. 3, MAX L corresponds to an amount of ammonia supplied to SNCR system 42 following a rapping event of third field 12 of 720 kg. Hence, upon supplying 720 kg of ammonia to SNCR system 42 following a rapping event of third field 12, another rapping event is initiated. At the same time as each rapping event, the summing function of rapping controller 84 is reset to 0 kg ammonia, and again begins to sum the amounts of ammonia supplied to SNCR system 42.

Hence, rapping controller 84 controls the cleaning of the first and second fields 8, 10 with the objective of avoiding ammonia concentrations of removed dust collected in collecting bins 66 and 70 exceeding the MAX C, established for removed dust for use in cement production. Furthermore, rapping controller 84 controls the cleaning of third field 12 with the objective of avoiding ammonia concentrations of removed dust collected in collecting bin 74 exceeding the MAX L, established for removed dust acceptable for normal land filling. As described hereinbefore, a rapping event may occur earlier than required based on MAX C and MAX L. For example, the amount of dust particles collected on collecting electrode plates 28 has become too high causing a rapping event to occur. The amount of dust particles collected on collecting electrode plates may be detected as a decreased voltage measured between the collecting electrode plates 28 and the corresponding discharge electrodes 26 of a specific field, or as an increased frequency of "spark-over" between the collecting electrode plates 28 and the corresponding discharge electrodes 26 of a specific field. Using such information, rapping controller 84 may initiate a rapping event prior to it being dictated based on ammonia concentration of collected dust particles. Rapping controller 84 may also be provided with a simple timer function according to which, for example, a rapping event occurs in the first, second, and third fields 8, 10 and 12 at least once every 3 minutes, 30 minutes, and 4 hours, respectively. Hence, rapping controller 84 could control rapping events in accordance with two or more different criteria including, for example; a first criterion stipulating when a rapping event must occur to avoid too high a concentration of ammonia in the collected dust particles, such first criterion being based on, for example, MAX C or MAX L, and a second criterion stipulating when a rapping event must occur to avoid excessive amounts of collected dust particles from forming on the collecting electrode plates 28. Rapping controller 84 may be set to initiate a rapping event as soon as any one of these criteria has been reached. The respective summing function is then reset to 0 kg following a rapping event initiated based on any one of the criteria set forth above.

As described above, curves "Field 8", "Field 10" and "Field 12" illustrate the correlation between the amount of reducing agent supplied and the corresponding concentration of reducing agent on the removed dust based on measurements. It will be appreciated that such curves, or corresponding mathematical functions, may also, as alternative to, or in combination with, measurements, be based on a mathematical model predicting the concentration of reducing agent on dust particles taking suitable operating parameters into account.

Above it has been described, with reference to Fig. 3, that upon supply of a certain amount of ammonia, in kg, to SNCR system 42 following a rapping event of a particular field, another rapping event is initiated in that field. It will be appreciated that the relevant factor may be the amount of reducing agent, for example ammonia, in relation to a certain amount of dust particles. Hence, if the amount of dust particles entering a particular field of the electrostatic precipitator varies considerably over time, it may be suitable to take such fact into account when deciding on the initiation of rapping events. Thus, in an occasion when the ratio of kg reducing agent to kg dust particles is higher than normal, rapping needs to be performed more frequently, compared to the occasion when such ratio is lower than normal. Assume, for example, that for first field 8, an amount of ammonia supplied of 650 kg would normally cause initiation of a rapping event, as illustrated in Fig. 3. In a situation of a higher than normal ratio of kg ammonia to kg dust particles a rapping event may be initiated already at a supply of ammonia of 600 kg. On the other hand, in a situation of a lower than normal ratio of kg ammonia to kg dust particles a rapping event may be initiated at a supply of ammonia of 700 kg. It will be appreciated that a relation could be established between the ratio of kg ammonia to kg dust particles and the corresponding amount of ammonia initiating rapping, such that for each ratio of kg ammonia to kg dust particles an amount of ammonia initiating rapping can be calculated.

Above it has been described, with reference to Fig. 3, that the concentration of the reducing agent, such as ammonia, of the removed dust is estimated based on a correlation between the amount of reducing agent supplied to the process gas and the corresponding concentration of reducing agent on the removed dust. The estimation of the concentration of reducing agent on removed dust may, as alternative, be based on other operating parameters as alternative to, or in combination with, the amount of reducing agent supplied upstream of the dust removal device. The rapping controller 84 could receive the values of such other parameters from control system 50 illustrated in Fig. 1, from a main plant control system (not illustrated in Fig. 1) controlling the operation of the entire power plant 1, from specific measurement devices, or from other sources. Examples of such other parameters include: the measured concentration of gaseous reducing agent, such as ammonia, in as an example the unit ppm, as measured in the process gas upstream of electrostatic precipitator 6; the process gas temperature; the load on boiler 2; the residence time of the dust particles in the electrostatic precipitator, as given by the actual time between cleaning sequences; the dust particle size; the type of fuel supplied to boiler 2; the concentration of substances prone to react with the reducing agent, such as sulphur trioxide (SO₃) and nitrogen oxides (NOx) and the like.

Above described, electrostatic precipitator 6 is provided with three fields 8, 10 and 12, and respective hoppers 30, 32 and 34 emptied into three different collecting bins 66, 70 and 74. It will be appreciated that the electrostatic precipitator may be provided with any number of fields, for example from 1 to 10 fields, each such field having one or several hoppers emptied into any number of different collecting bins.

As an alternative to controlling rapping events solely based on measured and/or mathematically calculated correlations between amount of ammonia supplied and concentration of ammonia in collected dust particles as depicted in Fig. 3, rapping controller 84 may also utilize measuring devices 86, 88 and 90. In such a case, rapping controller 84 would receive a signal from, e.g., measuring device 86 indicating the concentration of ammonia in removed dust leaving the hopper 30. Based on this information, rapping controller 84 controls rapping device 76 so that a rapping event is initiated before the concentration of ammonia in the dust particles on the collecting electrode plates exceeds concentration MAX C, which according to the previous example is the maximum concentration allowed for use of the removed dust in the cement industry. It will be appreciated that measuring device 86 measures the concentration of ammonia in the removed dust in disposal pipe 64, i.e., the concentration of ammonia in removed dust already removed from collecting electrode plates 28. Hence, rapping controller 84 is preferably made to estimate the actual concentration of ammonia in the dust particles that are actually on collecting electrode plates 28. Such estimation may be based on the concentration of ammonia measured by means of measuring device 86 and a suitable correlation between operating parameters, such as amount of ammonia supplied to SNCR system 42 and the actual concentration of ammonia in the dust particles. This type of information is useful, for example, for developing a correlation or curve of the type identified as "Field 8" in Fig. 3. The execution of rapping events in second and third fields 10 and 12 may be controlled by rapping controller 84 based on measurement data obtained from measuring devices 88, 90, respectively, according to similar principles as those used in controlling of the rapping events of first field 8.

It will be appreciated that numerous variants of the embodiments described above are possible within the scope of the appended claims.

Above is described a dust removal device that is an electrostatic precipitator 6. It will be appreciated that the method and cleaning controller system described above may be used for other types of dust removal devices. One example of another type of dust removal device is a fabric filter, such as that disclosed in US 4,336,035, incorporated herein in its entirety by reference. In a fabric filter, dust particles are collected on the surface of fabric, which may for example, be arranged as a filter bag. In the case of a fabric filter, the cleaning controller is operative for controlling when the fabric surface is to be cleaned. Such cleaning may, for example, comprise supplying an air pulse into a filter bag to release dust collected thereon, as is disclosed in US 4,336,035, incorporated herein in its entirety by reference. The cleaning controller would, in the case of a fabric filter, control the air pulse event to occur no later than when the concentration of reducing agent in the dust particles collected on the fabric has reached a certain pre-established limit value, for example MAX C. MAX C in this example may be the maximum concentration of ammonia in the removed dust acceptable for the removed dust to be useful in the cement industry. Likewise, the subject cleaning controller system and method may also be utilized in combination with other dust removal devices, such as cyclones.

As described herein as an example, quality criterion MAX C represents the maximum allowable concentration of ammonia in the removed dust for the removed dust to be used in the cement industry. It will be appreciated that other types of quality criterion may also be utilized, depending on the intended use of the removed dust material. Furthermore, the quality criterion need not be fixed over time. For example, if the removed dust collected in second collecting bin 70 has been for a period of time well below the requirements of the cement industry with regard to the concentration of ammonia, rapping controller 84 may for a period of time apply a quality criterion identified as for example, "MAX C 120", which is equal to an ammonia concentration of 120% of quality criterion MAX C. In that way, removed dust with a concentration of reducing agent higher than quality criterion MAX C may also for a period of time be allowed to collect in second collecting bin 70. Since second collecting bin 70 already contains removed dust having a substantially lower concentration of reducing agent than MAX C, such addition of "MAX C 120" removed dust results in making second dust bin 70 when full, contain removed dust having a total concentration of reducing agent just below MAX C and thereby acceptable for use in the cement industry.

Above described is a cleaning controller adapted for controlling the cleaning of one dust removal device, for example an electrostatic precipitator or a fabric filter. It will be appreciated that the subject cleaning controller may also be adapted for controlling the cleaning of two or more dust removal devices, wherein such dust removal devices are located in parallel or serial relation to each other, with respect to the flow direction of the process gas.

Above removed dust has been described as being collected in three separate dust collecting bins 66, 70 and 74. It will be appreciated that other dust storage devices may be utilized for collecting the various dust materials. Examples of such other devices include the platform of a truck, a storage silo, a railroad car, a hardened surface on the ground, and the like. Furthermore, it may also be possible to utilize more or fewer than three different dust storage devices for collecting the removed dust. For example, a first dust collecting bin may be provided for collecting dust from the first and second fields 8 and10 of electrostatic precipitator 6, and a second dust collecting bin may be provided for collecting dust from third field 12 of electrostatic precipitator 6.

Described above is a processing unit that generates process gas such as a combustion unit in the form of a coal fired boiler. It will be appreciated that other types of combustion units may also be utilized, such as for example oil fired boilers, peat fired boilers, waste incinerator units and the like. Furthermore, the subject processing unit may also be a processing unit in which no, or only limited, combustion occurs, but still generates a process gas containing dust particles. Examples of such non-combustion processing units include blast furnaces and other such devices utilized in the iron and steel industry.

Rapping controller 84 is described above as operative for individually controlling the cleaning of each of the fields 8, 10 and 12 of electrostatic precipitator 6. It will be appreciated that rapping controller 84 may also be designed to individually control the rapping of only one, of two or of any number of the fields. For example, rapping controller 84 may be operative for controlling the rapping events of second and third fields 10 and 12, while the removed dust of first field 8 is expected to always meet the requirements of the cement industry, due to the larger amounts of dust particles collected in first field 8.

Hereinbefore it has been described that a reducing agent may be supplied to dust removal device 6 from, for example, SNCR system 42, SCR system 52, or ammonia conditioning system 60. It will be appreciated that reducing agent may also be supplied to dust removal device 6 from another source. One example of such a source is the fuel supplied to boiler 2, such fuel either comprising, in itself, a reducing agent, or causing the generation of a reducing agent during combustion or subsequent cooling of the process gas generated during combustion, such reducing agent becoming absorbed on dust particles collected in dust removal device. It may be possible, by direct or indirect measurements, to measure the amount of such fuel dependent reducing agent entering the dust removal device and to control the cleaning of dust removal device by the method and cleaning controller described hereinbefore.

To summarize, a method of controlling the concentration of reducing agent in a dust material formed as a by-product in a process plant 1, comprising a processing unit 2 and a dust removal device 6, comprises executing a cleaning sequence established based on an estimated concentration of reducing agent in dust particles collected in dust removal device 6, to remove at least a portion of the collected dust particles from the dust removal device 6.

## Claims

1. A method of controlling the concentration of a reducing agent in a dust material formed as a by-product in a process plant (1), said process plant (1) comprising a processing unit (2) generating a process gas containing dust particles, and a dust removal device (6) for collecting at least a portion of the dust particles in the process gas, comprising
executing a cleaning sequence established based on an estimated concentration of reducing agent in the dust particles collected in dust removal device (6), to remove at least a portion of the collected dust particles from dust removal device (6).

2. A method according to claim 1, wherein the estimated concentration of reducing agent in the dust particles collected in the dust removal device (6) comprises comparing the estimated concentration of reducing agent to a limit value, and the cleaning sequence is executed when the estimated concentration of reducing agent reaches the limit value.

3. A method according to any one of the preceding claims, wherein the estimated concentration of reducing agent in the dust particles collected in dust removal device (6) comprises measuring the amount of reducing agent supplied to dust removal device (6) and utilizing a correlation between the amount of reducing agent supplied to dust removal device (6) and the concentration of reducing agent in the dust particles collected in dust removal device (6).

4. A method according to any one of the preceding claims, wherein the estimated concentration of reducing agent in the dust particles collected in dust removal device (6) comprises measuring, directly or indirectly, the concentration of reducing agent in the dust particles collected in dust removal device (6).

5. A method according to any one of the preceding claims, wherein the dust removal device comprises at least two compartments (8, 10, 12), and the estimated concentration of reducing agent in the dust particles collected in the dust removal device (6) comprising estimating individually for each compartment (8, 10, 12) the concentration of reducing agent in the dust particles collected in each compartment (8, 10, 12), and executing, individually for each compartment, the cleaning sequence.

6. A cleaning controller for controlling concentration of a reducing agent in a dust material formed as a by-product in a process plant (1), the process plant (1) comprising a processing unit (2) generating a process gas containing dust particles, and a dust removal device (6) for collecting at least a portion of the dust particles of the process gas, **characterized in** the cleaning controller (84) being operative for estimating a concentration of reducing agent in the dust particles collected in the dust removal device (6), and for initiating a cleaning sequence to remove at least a portion of the dust material from the dust removal device (6), using the estimated concentration of the reducing agent.

7. A cleaning controller according to claim 6, wherein the cleaning controller (84) is operative for estimating the concentration of the reducing agent of the dust particles collected in the dust removal device (6), for comparing the estimated concentration to a limit value, and for initiating the cleaning sequence when the estimated concentration reaches the limit value.

8. A cleaning controller according to any one of claims 6-7, wherein the cleaning controller (84) is operative for receiving a signal indicating an amount of reducing agent supplied to dust removal device (6) and for estimating the concentration of the reducing agent in the dust particles collected in dust removal device (6) based on a correlation between the amount of reducing agent supplied to dust removal device (6) and the concentration of reducing agent in the dust particles collected in dust removal device (6).

9. A cleaning controller according to any one of claims 6-8, wherein the cleaning controller (84) is operative for receiving a measurement signal indicating the results of a direct or indirect measurement of the concentration of reducing agent in the dust particles collected in the dust removal device (6), and for utilizing said signal in estimating the concentration of the reducing agent in the dust particles collected in the dust removal device (6).

10. A cleaning controller according to any one of claims 6-9, wherein the cleaning controller (84) is operative for estimating the concentration of the reducing agent in the dust particles collected in the dust removal device (6) comprising at least two compartments (8, 10, 12) individually for each compartment, and initiating a cleaning sequence individually for each compartment (8, 10, 12).
